# EUROPEAN PATENT SPECIFICATION

(11) **EP 0 265 019 B1**
(45) Date of publication and mention of the grant of the patent: **20.01.1993**
(21) Application number: 87202004.5
(22) Date of filing: 19.10.1987
(51) Int. Cl.: B31B 1/90

(54) **Apparatus and process for forming and applying a profile and adjacent rib-type zipper to a traveling film web**
Apparat und Verfahren zum Bilden und Anbringen der Elemente eines Reissverschlusses auf eine bewegende Bahn
Appareil et procédé pour former et appliquer les éléments d'une fermeture-éclair sur une bande en mouvement

(30) Priority: 20.10.1986 US 921023
(43) Date of publication of application: 27.04.1988
(73) Proprietor: DowBrands Inc., Indianapolis Indiana 46268 (US)
(72) Inventor: Zieke, Larry, Midland Michigan 48640 (US); Trombley, James, Bentley Michigan 48613 (US)
(74) Representative: Smulders, Theodorus A.H.J., Ir.

(56) References cited:
- EP-A- 0 155 612
- AU-B- 567 799
- DE-A- 2 223 780
- GB-A- 2 046 660
- GB-A- 2 116 115
- US-A- 3 380 481
- US-A- 3 685 562
- US-A- 3 765 809
- US-A- 4 101 355
- US-A- 4 290 989
- US-A- 4 392 897
- US-A- 4 428 788
- PATENT ABSTRACTS OF JAPAN, vol. 9, no. 155 (M-392)[1878], 29th June 1985; & JP-A-60 31 937 (HASHIMOTO FORMING KOGYO K.K.) 18-02-1985

## Description

The present invention relates to a method of applying a profile with adjacent ribs to a traveling film web to form a zipper-like closure according to claim 1, to an extrusion means according to claim 6 and to an apparatus according to claim 12.

Reclosable bags have been used in a wide variety of applications and are typically formed from a web of plastic film which is formed, folded, sealed and cut to form a bag having three closed sides, and one reclosable side. The reclosable side of the bag includes a male fastener element and a female fastener element which are positioned in an opposed relationship. The user can engage the male and female fastener elements to seal the bag, and can disengage the male and female elements to gain access to the interior of the bag. A male fastener element typically consists of a male closure profile having a head which is shaped to be received in a cavity provided by a female closure profile. For example, Ausnit, U.S. Patent No. 3,338,284 discloses a fastener element having an arrow-shaped head which is sized and shaped to be received by a mushroom-shaped cavity in a generally C-shaped female closure profile. Although closure elements of the type shown in the Ausnit patent can be manufactured to function quite well, room for improvement exists.

One improvement as described in EP-0 155 612, relates to the use of a fastener element wherein the male profile element is joined by a pair of adjacent ribs. This type of fastener element consists generally of a standard female closure profile which is used in conjunction with a modified male closure profile. The male closure profile is modified to include a first rib member which is disposed on one side of the closure profile, and a second rib member which is disposed on the other side of the closure profile. Both the first and second rib members extend in a generally parallel, spaced relation to the male closure profile. The rib members improve the operation of the zipper by stiffening the area of the film around the male closure profile member, thereby helping the user to align and engage the male and female closure profile members. Additionally, it is believed that the rib members better distribute the closing force exerted by the user over a greater area of the bag film, thus making the user feel as though the male and female closure members are easier to engage.

Conventionally, this type of zipper is formed by extruding the male closure profile and rib members integrally with the extrusion of the film. Although this integral extrusion process can function quite well in forming a fastener having ribs adjacent to the profile member, it has some drawbacks. The primary drawback of the integral extrusion process is that it limits the manufacturer's flexibility in the production of reclosable bag film webs. As the integral extrusion process requires that the film and closure member be formed at the same time, the manufacturer cannot use the integral extrusion process to place a closure member onto an existing film web. The flexibility to place a closure member onto an existing film web is often desirable in prototype applications, low volume applications, specialty applications, and applications wherein the purchaser desires to purchase his bag film material from one source, and his closure members from a second source.

To overcome this lack of flexibility, it would be helpful to be able to form the closure member separately from the formation of the bag film web, and to join the closure member to the bag film web thereafter.

One method of applying a rib containing closure member to a preformed bag film web is to extrude a base member, a closure profile, a first rib member and a second rib member together as a unitary extrudate. The underside surface of the base portion of the resulting unitary extrudate is then joined to a traveling bag film web. Although this method has been utilized successfully in some applications, in other applications air has become entrapped between the rather wide base and the underlying film web. This can result in poor adherence of the closure member to the web and less than satisfactory operation of the closure members when in use.

The invention particularly resides in a method for applying a profile with adjacent ribs to a traveling film web to form a zipper-like closure, comprising the steps of extruding a closure profile member, a first rib member and a second rib member as three separate extrudates, and joining said closure profile member, first rib member and second rib member to said film web in an aligned relation such that said closure profile member is disposed between said first and second rib members.

The invention also resides in an extrusion means for extruding a closure profile member, a first rib member and a second rib member onto a film web of a synthetic, resinous material, comprising an extrusion die having a closure profile die slot through which said closure profile member is extruded , a first rib member die slot through which said first rib member is extruded, and a second rib member die slot through which said second rib member is extruded, said closure profile die slot, and said first and second rib member die slots being positioned to extrude said closure profile member, and said first and second rib members as three separate extrudates, and delivering said closure profile member, and said first and second rib members to said film web in an aligned relation such that said closure profile member is disposed between said first and second rib members.

The invention further resides in an apparatus for applying a closure profile with adjacent ribs to a traveling film web of a synthetic resinous material, comprising a first extrusion means for extruding a base member, means for pressing said base member onto said film web, a second extrusion means for extruding a closure profile member, a first rib member and a second rib member as three separate extrudates, said second extrusion means being configured for separately joining said closure profile member, and said first and second rib members to said base member in an aligned relation such that said closure profile member is disposed between said first and second rib members.

In accordance with the method of the invention, a zipper is applied to a traveling film web by extruding a closure profile member, a first rib member, and a second rib member as three separate extrudates and of joining them to the film web in an aligned relation such that the profile member is disposed between the first and second rib members.

The method may also include the steps of extruding a generally planar base member and joining the base member to the film web before the closure profile and rib members are joined to the film web.

Additionally, an extrusion means is provided for extruding the closure profile member, first rib member, and second rib member. The extrusion means includes means for heating and feeding the plastic material to be extruded, and an extrusion die for extruding the closure profile member, first rib member and second rib member as three separate extrudates.

In a preferred embodiment, the extrusion die includes a closure profile die slot which is vertically offset from a first and a second rib member die slot, and the first and second rib member die slots are vertically offset from each other.

One feature of the present invention is that it permits the profile member and ribs to be formed separately from the film web. this feature has the advantage of providing a manufacturer with greater flexibility in his choice of synthetic resinous materials. Thus, the choice of material for use in the film web is not constrained by material requirements imposed by the closure member. Further, this feature has the advantage of providing the manufacturer with greater flexibility in his decision of when to join the closure profile member to the film web. The manufacturer is not limited to joining the closure member to the film web during the formation of the film web, but rather can join the closure member of the instant invention to a preformed film web.

It is also a feature of the present invention that the extrusion of the closure profile member and rib members as separate extrudates facilitates the engagement of the profile and rib members to the film web without the formation of air pockets therebetween. This facilitated engagement helps to produce a good bond between the film web and the closure profile and rib members, thus producing an aesthetically pleasing functioning reclosable bag.

A further feature of a preferred embodiment of the present invention is that the vertically offset die slots through which the closure profile member, first rib member and second rib member are extruded provides for the proper alignment and spatial separation of the closure profile and rib members on the film web. This proper alignment can be achieved without forcing the manufacturer to reduce the size of the closure profiles or rib members, while avoiding any "blend in" problems between the closure profile and rib members. "Blend in" is a condition resulting from an inadequate spacing between the closure profile and rib members which causes the sides of the closure profile and rib members to become fused together after the members emerge from their die slots.

It should be noted that Australian Patent No.567799 describes a method of forming plastic fastener and plastic accessory strips and uniting the same with a film, the method comprising an apparatus having a single extruder in which a first forming die for extruding said accessory strips and a second forming die for extruding components of said plastic fastener having male and female profiles are mounted independently of and in side-by-side relation to each other, said first forming die having a higher forming temperature than said second forming die.

In this method the plastic fastener and plastic accessory strips are extruded by different forming dies; the dies being at different temperatures. This is done because of the fact that the fastener and the accessory strips, which are different in shape and weight, should be formed at different optimum temperatures and therefore the use of two forming dies is proposed. Apart from the fact that the present invention does not relate to a method of forming plastic fastener and plastic accessory strips and fillets but to a method for forming and applying a closure profile and adjacent rib members to a traveling film web, which adjacent rib members serve a different purpose and have different requirements than accessory strips and fillets, the closure profile member and the adjacent rib members are, in contradistinction to the method according to said Austalian patent, formed by a single extrusion die with a specific slot arrangement. The specific slot arrangement in the single extrusion die of the invention offers a solution to the above-mentioned "blend in" problems, which solution can not be derived from said Austalian patent. Moreover, the use of a single extrusion die for forming both the closure profile members and the adjacent rib members is less expensive than the use of two seperate forming dies as proposed in said Australian patent.

Additional features and advantages of the present invention will become apparent to those skilled in the art upon consideration of the following detailed description of the preferred embodiments exemplifying the best mode of carrying out the invention as presently perceived.
Figure 1 is a perspective, schematic view of the apparatus of the present invention;
Figure 2 is a side view of the forming and joining station of the present invention;
Figure 3 is an enlarged sectional view taken along lines 3-3 of Figure 2;
Figure 4 is an enlarged, sectional view taken along lines 4-4 of Figure 2;
Figure 5 is an enlarged, sectional view taken along lines 5-5 of Figure 2;
Figure 6 is an enlarged, sectional view of the film web of the present invention showing the male and female closure profiles in an engaged position;
Figure 7 is a sectional view of an alternate embodiment fastener element extrusion die; and
Figure 8 is a sectional view, illustrating the male fastener element produced from the die of Figure 7 being engaged with a female fastener element.

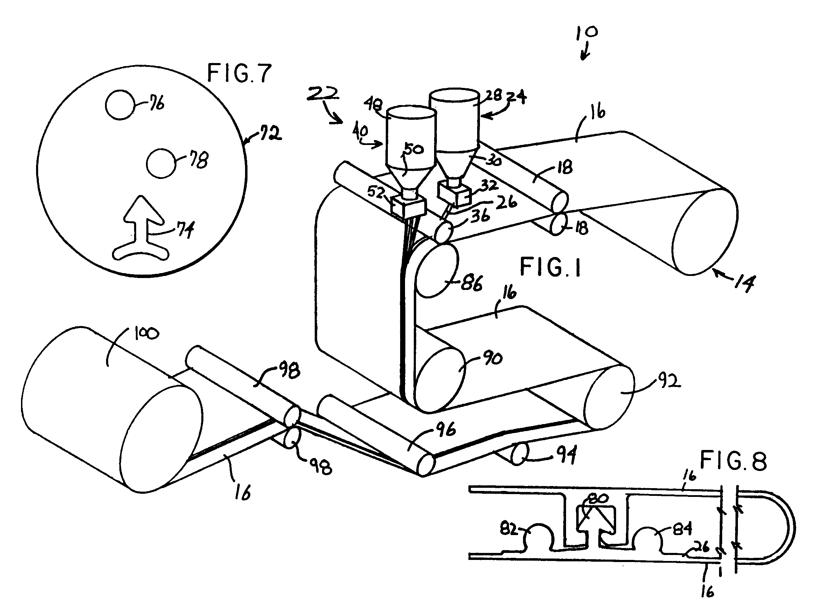

The apparatus for forming a closure member and for joining the closure member to a traveling film web is generally shown in Figure 1 and identified by reference number 10. The apparatus 10 includes a roll 14 from which a web of film 16 is drawn. The film has a thickness of from 0.025 to 0.2 mm, and generally has a constant thickness throughout its width. The film 16 can comprise a single layer of a plastic material, or a laminate consisting of two or more layers of a plastic material. A wide variety of polymeric materials can be used in the film 16 such as, for example, polyolefins and blends of polyolefins with other ethylenically unsaturated carboxylic acids or esters. Some of the more popular synthetic resinous materials are high density polyethylene (HDPE), low density polyethylene (LDPE), and blends of HDPE with ethylene vinyl acetate. Various multilayered film structures may also be used such as a 2-layered structure of nylon and LDPE or a 3-layered structure such as LDPE/EVOH/LDPE.

After emerging from the roll 14, the film is drawn through a pair of idler rollers 18 for properly positioning of the film. Alternately, drive rollers (not shown) can be used in place of idler rollers 19.

The film 16 is then drawn into a forming and joining station 22 which includes a first extrusion means 24 for extruding a base member 26. The first extrusion means 24 includes a hopper 28 for receiving a plastic material, a body 30 which contains a heating means (not shown) for heating the plastic material into a molten state, and a screw auger (not shown) for advancing the molten material to and through a die block 32. The die block 32 includes a die slot (not shown) which has a generally strap-like cross-sectional shape for extruding a generally strap-shaped base member 26. The base member 26 so extruded preferably has a thickness of from 0.05 to 0.76 mm and a width of about 9.5 mm.

The relative thickness of the base member 26 permits the base member 26 to serve as a heat sink, and to retain a considerably amount of residual heat after its extrusion. This retained residual heat helps to promote the fusion of the base member 26 to the film 16, and also helps promote the fusion of the closure profile and rib members to the base member 26, and hence to the film web 16.

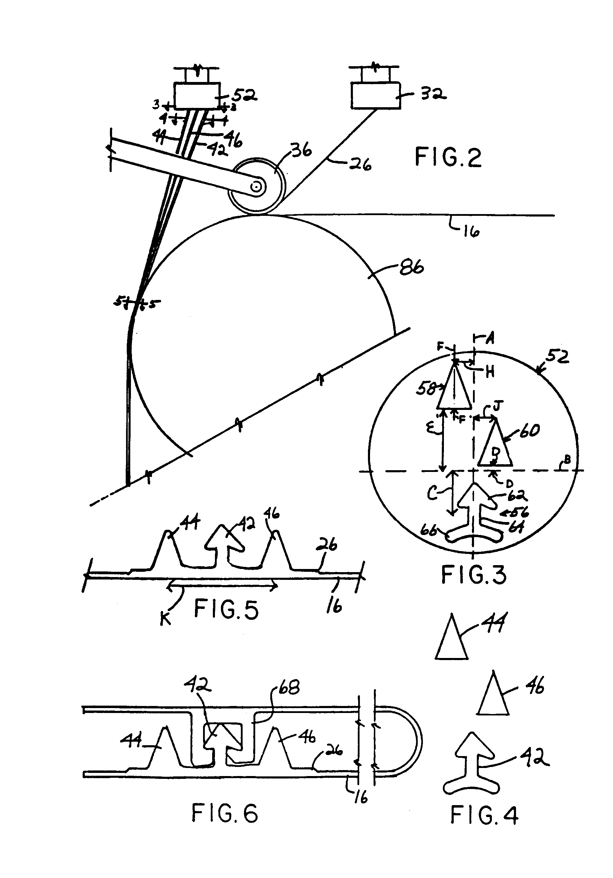

A polytetrafluoroethylene (PTFE) coated layer on roller 36 is provided for applying the base member 26 to the film 16 by pressing the base member 26 into engagement with the film 16, as best shown in Figure 2. By pressing the base member 26 into engagement with the film 16, the PTFE layer facilitates the bonding of the base member 26 to the film by driving out air pockets which might form between the underside surface of the base member 26 and film 16. The removal of these air pockets helps to ensure the formation of a good bond between the base member 26 and film 16.

A second extrusion means 40 is provided for extruding a male closure profile member 42, a first rib member 44 and a second rib member 46, which form the three primary components of the male portion of the zipper-like fastener of the invention. The second extrusion means 40 includes a hopper 48 and a body 50 which are similar in structure and function to the hopper 28 and body 30 of first extrusion means 24.

Referring now to Figures 3 to 5, the second extrusion means includes a die block 52 having a male profile member die slot 56, a first rib member die slot 58, and a second rib member die slot 60, through which the profile member 42, first rib member 44, and second rib member 46, respectively, are extruded as three separate extrudates. The male profile member die slot 56 typically has an arrow-shaped head portion 62, a shaft portion 64, and a generally arcuate tail portion 66, to yield a male profile member 42 having similarly shaped head, shaft and tail portions. Other male profiles shapes may also be utilized. The first and second rib member die slots 58, 60 may be of a similar shape. For example, as shown, both die slots 58 and 60 comprise isosceles triangles in cross-section. For example, each rib member die slot 58, 60 can have a pair of 70° base angles and a 40° apex angle. The rib member die slots 58, 60 are vertically offset from each other, and are each vertically offset from the profile member die slot 56. Additionally, the rib member die slots 58, 60 are offset laterally from each other.

To illustrate the degree to which the three die slots 56, 58, 60 are vertically and laterally offset, the following example is provided which is illustrative of the relative size and spacing of the three die slots 56, 58, 60. This example is not intended to be limiting. Other dimensions and spacings may be utilized depending upon the desired size and spacing of the elements for a given application. The dimensions set forth in the following example are given relative to an imaginary longitudinal bisector A which bisects the closure profile die slot 56, and an imaginary latitudinal bisector B.

With respect to the vertical spacing, the distance C between the center of the profile die slot 56, and the latitudinal bisector B is 6.35 mm. The distance D between the base of the second rib member die slot 60 and the latitudinal bisector B is 0.9 mm. The distance E between the base of the first rib member die slot 58 and the latitudinal bisector B is 7.35 inches. As the height of each rib member die slot 58, 50, is 4.88 mm, the vertical spacing between the apex of the second rib member die slot 60 and the base of the first rib member die slot 58 is 1.6 mm.

With respect to horizontal spacing, the distance H between the apex of the first rib member die slot 58 and the longitudinal bisector A, and the distance J between the apex of the second rib member die-slot 60 and the longitudinal bisector A are each 2.15 mm, thus yielding a horizontal spacing of 4.3 mm between the apices (and hence the vertical axes) of the first and second rib member die slots 58, 60.

This horizontal spacing between the rib member die slots 58, 60 is chosen to yield the proper spacing between the rib members 44 and 46 when the rib members become joined to the film 16. Applicants have found that the spacing between the apices of the first and second rib members 44, 46 should generally be between about 3.4 and 4.6 mm. Applicants have also found that the distance at which the rib members 44, 46 are spaced when they are applied to the film 16 will correspond generally to the horizontal (lateral) spacing between the rib member die slots 58, 60. Thus, in the example given above, the 4.3 mm spacing between the first and second rib member die slots 58, 60 will result in a lateral spacing K of approximately 4.3 mm between the applied rib members 44, 46. Further, as the preferred lateral spacing between the first and second rib members is between about 3.4 and 4.6 mm, the preferred lateral spacing between the rib member die slots 58, 60 should be between about 3.4 and 4.6 mm.

By vertically offsetting the profile die slot 56 and the rib member die slots 58, 60, proper spacing can be achieved between the closure profile member 42 and the rib members 44, 46. It has been found that positioning die slots 56, 58 and 60 to be horizontally offset to provide the proper spacing, but not vertically offset, produces results which are not totally satisfactory. It was found that if the rib member die slots were placed too close to the closure profile die slot, the rib members when extruded onto the film have a tendency to "blend in" with the closure profile member. This blending in takes place just after the extrudates emerge from the die slot, and is a condition wherein the heat plastified material along the sides of the rib members become fused to the heat plastified material along the sides of the profile member. This creates an unsatisfactory fastener element which may not be able to properly interlock with its opposing fastener element to form a sealed zipper-like fastener.

To alleviate this blending in problem, the size of the rib members may be reduced. The proper spacing is then maintained between the rib members because the smaller size of the rib members increases the space between each of the rib members and the profile member. Although the use of smaller rib members helps to prevent the profile member from blending in with the rib members, the reduced size of the rib members also reduces the ability of the rib members to stiffen the area of the film adjacent to the profile member and thus, the effectiveness of the zipper is reduced, if not totally impaired.

Applicants have found that the vertically offset configuration of the die slots 56, 58, 60 shown in Figure 3 permits properly sized rib members to be extruded without becoming blended in with the profile member 42, and while still preserving the proper spatial alignment between the first and second rib members 44, 46 and the profile member 42 when the profile and rib members are applied to the film 16. As illustrated in Figure 6, the rib members 44, 46 should be spaced far enough apart to permit a pair of prongs provided on the female closure member 68 to be inserted interiorly of the rib members 44, 46 and exteriorly of the profile member 42, while being sufficiently close together to stiffen the area of the film 16 adjacent to the profile member 42.

An alternate embodiment die block 72 is shown in Figure 7. Here, the die block 72 includes a profile die slot 74, a first rib member die slot 76, and a second rib member die slot 78, through which a male profile member 80, first rib member 82, and a second rib member 84, respectively, are extruded as separate extrudates. Preferably, the position, size and shape of the profile die slot 74 is similar to profile die slot 56. Although first and second rib member die slots 76, 78 have a generally circular cross section, and are thus different from the rib member die slots 58, 60, the relative placement of the respective first rib member die slots 58, 76 and second rib member die slots 60, 78 is similar for both die blocks 52, 72. As shown in Figure 8, the zipper-like fastener formed from the profile and rib members 74,76, and 78 extruded from die block 72 is similar to the zipper formed from the extrudates of die block 52, except insofar as the cross-sectional shape of the rib members differ from each other. Rib members 82, 84, having a circular cross-section are preferred in some applications because triangular rib members 44, 46 can rotate during their travel from the die block 52 to the film 16, thus causing one or both of the rib members 44, 46 to engage the film 16 in a "tipped over" position. In a tipped over position, one of the side legs of the rib members 44, 46 engages the upper surface of the base member 26, rather than the base leg of the rib member 44, 46 engaging the upper surface.

Referring again to Figures 1 and 2, the base member 26 is joined to the film 16, and the profile 42 and rib members 44, 46 are subsequently joined to the upper surface of the base member 26. Due to the ability of the base member 26 to retain residual heat, and due to the short distance (and hence time) between the point at which the base member 26 is joined to the film 16, and the point at which the profile and rib members 42, 44, 46 are joined to the base member, it will be apparent that the closure profile 42 and rib members 44, 46 will become joined to the base member 26 before the base member 26 has cooled to an ambient temperature. The residual heat retained by the base member 26 fosters fusion between the closure profile 42 and rib members 44, 46 and the base member 25. The lamination roll 86 serves the dual purpose of providing a backing support to facilitate engagement of the base member 26, closure profile 42 and rib members 44, 46, and also serves to cool, and thereby solidify and bond the base member 26, profile 42 and rib members 44, 46 to each other and to the film 16.

After passing around lamination roll 86, the closure member bonded to film 16 travels past a pair of water jets (not shown) and around idler rolls 90, 92. The water jets accelerate cooling of the base member 26, profile 42 and rib members 44, 46 to further solidify and bond them to each other and to the film 16, and to help cool the above components to an ambient temperature. The film 16 then passes around a pair of idler rollers 94, 96 and through a pair of drive rollers 98. After passing through drive rollers 98, the film 16 is wound onto take up roller 100.

In the manner described above, it is also possible to apply a closure element having a closure profile member 42, and a pair of aligned rib members 44, 46, directly onto the film 16. It has been found that the system described above provides an efficient and flexible means for applying this type of closure element to a film for use in the manufacture of reclosable plastic bags. While not forming a part of the present invention, it will be apparent to those skilled in the art that a female profile may be extruded and laminated to the film at the same time as the male profile and rib members are laminated to provide a film web which is ready to be folded, side-sealed, and severed to form individual reclosable bags.

Having described the invention in detail and by reference to preferred embodiments thereof, it will be apparent that modifications and variations are possible without departing from the scope of the invention defined in the appended claims.

## Claims

1. A method for applying a profile (42, 80) with adjacent ribs (44, 46; 82, 84) to a traveling film web (16) to form a zipper-like closure comprising the steps of:
extruding a closure profile member (42, 80), a first rib member (44, 80), and a second rib member (46, 82) as three separate extrudates, and
joining said closure profile member (42, 80), first rib member (44, 80), and second rib member (46, 82) to said film web (16) in an aligned relation such that said closure profile member (42, 80) is disposed between said first (44, 80) and second (46, 82) rib members.

2. The method of claim 1, including the steps of extruding a generally planar base member (26), and joining said base member (26) to said film web (16) prior to joining said closure profile (42, 80) and rib members (44, 46; 82, 40) to said base member (26).

3. The method of claim 2, including the step of pressing said base member (26) into engagement with said film web (16) with a roller (36), and joining said closure profile member (42, 80), first rib member (44, 80) and second rib members (46, 82) to said base member (26) after said base member (26) has been joined to said film web (16) and before said base member (26) has cooled to an ambient temperature.

4. The method of claim 1, 2 or 3, wherein said closure profile member (42, 80), first rib member (44, 82) and second rib member (46, 84) are extruded through an extrusion die (52, 72) having a closure profile die slot (56, 74) through which said closure profile member (42, 80) is extruded, a first rib member die slot (58, 76) through which said first rib member (44, 82) is extruded, and a second rib member die slot (60, 78) through which said second rib member (46, 84) is extruded.

5. The method of any one of the preceding claims, including the step of extruding said closure profile member (42, 80) having, in cross-section, an arrow shaped head portion, a shaft portion and an arcuate base portion, and extruding said first (44, 82) and second (46, 84) rib members having, in cross-section, a generally triangular or circular shape, and wherein said first (44, 82) and second (46, 84) rib members are aligned on said film web (16) at a distance from each other of from 3.4 to 4.6 mm.

6. An extrusion means (52, 72) for extruding a closure profile member (42, 80), a first rib member (44, 82) and a second rib member (46, 84) onto a film web (16) of a synthetic resinous material, comprising an extrusion die (52, 72) having a closure profile die slot (56, 74) through which said closure profile member (74, 80) is extruded, a first rib member die slot (58, 76) through which said first rib member (44, 82) is extruded, and a second rib member die slot (60, 78) through which said second rib member (46, 84) is extruded, said closure profile die slot (56, 74), and said first and second rib member die slots (58, 76; 60, 78) being positioned to extrude said closure profile member (42, 74), and said first and second rib members (44, 76; 46, 78) as three separate extrudates, and delivering said closure profile member (42, 80), and said first (44, 76) and second (46, 78) rib members to said film web (16) in an aligned relation such that said closure profile member (42, 80) is disposed between said first (44, 82) and second (46, 84) rib members.

7. The extrusion means (52, 72) of claim 6, wherein said closure profile die slot (56, 74) and said first (58, 76) and second (60, 78) rib member die slots are vertically offset from each other.

8. The extrusion means (52, 72) of claim 7, wherein said closure profile die slot (56, 74) has a substantially vertical axis (A) bisecting said die slot (56, 74), with said first rib member die slot (58, 76) being disposed on one side of said axis (A) and said second rib member die slot (60, 78) being disposed on another side of said axis (A).

9. The extrusion means (52, 72) of claim 7, wherein said closure profile die slot (56, 74) includes a head portion (62), and at least one of said first (58, 76) and second (60, 78) rib member die slots are vertically offset from said head portion (62) by a distance greater than the distance (H) by which said at least one rib member die slot (58, 76) is laterally offset from said head portion (62).

10. The extrusion means (52, 72) of claim 7, 8 or 9, wherein said first (58, 76) and second (60, 78) rib member die slots are offset laterally from each other by a distance of from 3.4 to 4.6 mm.

11. The extrusion means (52, 72) of any one of claims 6-10, wherein said first (58, 76) and second (60, 78) rib member die slots each have a generally triangular-shaped or circularly shaped cross-section.

12. An apparatus (10) for applying a closure profile (42, 80) with adjacent ribs (44, 46; 82, 84) to a traveling film web (16) of a synthetic resinous material comprising:
a first extrusion means (32) for extruding a base member (26),
means (36) for pressing said base member (26) against said film web (16), and
a second extrusions means (52, 72) for extruding a closure profile member (42, 80), a first rib member (44, 82) and a second rib member (46, 84) as three separate extrudates, said second extrusion means (52, 72) being constructed for joining said closure profile member (42, 80), first rib member (44, 82) and second rib member (46, 84) to said film web (16) in an aligned relation such that said closure profile member (42, 80) is disposed between said first (44, 80) and second (46, 84) rib members.

13. The apparatus (10) of claim 12, wherein said second extrusion means (52, 72) includes an extrusion die (52, 72) having a closure profile die slot (56, 74) through which said closure profile member (42, 80) is extruded, a first rib member die slot (58, 72) through which said first rib member (44, 76) is extruded and a second rib member die slot (60, 78) through which said second rib member (46, 84) is extruded, and wherein said closure profile die slot (56, 74) is vertically offset from at least one of said first (58, 76) and second (60, 78) rib member die slots.

14. The apparatus (10) of claim 13, wherein said closure profile die slot (56, 74) is vertically offset from each of said first rib member die slot (58, 76) and said second rib member die slot (56, 78).

## Patentansprüche

1. Verfahren zur Anbringung eines Profils (42, 80) mit benachbarten Rippen (44, 46; 82, 84) an einer sich bewegenden Filmbahn (16), um einen reißverschlußartigen Verschluß zu bilden, umfassend die Schritte, daß
- ein Verschlußprofilelement (42, 80), ein erstes Rippenelement (44, 80) und ein zweites Rippenelement (46, 82) als drei getrennte Extrudate extrudiert werden und
- das Verschlußprofilelement (42, 80), das erste Rippenelement (44, 80) und das zweite Rippenelement (46, 82) mit der Filmbahn (16) in einer ausgerichteten Beziehung verbunden werden derart, daß das Verschlußprofilelement (42, 80) zwischen dem ersten (44, 80) und dem zweiten (46, 82) Rippenelement angeordnet wird.

2. Verfahren nach Anspruch 1, umfassend die Schritte, daß ein im wesentlichen ebenes Basiselement (26) extrudiert wird und das Basiselement (26) mit der Filmbahn (16) verbunden wird, bevor das Verschlußprofil (42, 80) und die Rippenelemente (44, 46; 82, 40) mit dem Basiselement (26) verbunden werden.

3. Verfahren nach Anspruch 2, umfassend den Schritt, daß das Basiselement (26) in Eingriff mit der Filmbahn (16) mit einer Walze (36) gedrückt wird und das Verschlußprofilelement (42, 80), das erste Rippenelement (44, 80) und das zweite Rippenelement (46, 82) mit dem Basiselement (26) verbunden werden, nachdem das Basiselement (26) mit der Filmbahn (16) verbunden worden ist und bevor das Basiselement (26) auf Umgebungstemperatur abgekühlt worden ist.

4. Verfahren nach Anspruch 1, 2 oder 3, bei dem das Verschlußprofilelement (42, 80), das erste Rippenelement (44, 82) und das zweite Rippenelement (46, 84) durch eine Extrusionsform (52, 72) extrudiert werden, die einen Verschlußprofil-Düsenschlitz (56, 74), durch den das Verschlußprofilelement (42, 80) extrudiert wird, einen ersten Rippenelement-Düsenschlitz (58, 76), durch den das erste Rippenelement (44, 82) extrudiert wird, und einen zweiten Rippenelement-Düsenschlitz (60, 78) aufweist, durch den das zweite Rippenelement (46, 84) extrudiert wird.

5. Verfahren nach einem beliebigen der vorhergehenden Ansprüche, umfassend den Schritt, daß das Verschlußprofilelement (42, 80) extrudiert wird, das im Querschnitt einen pfeilförmigen oberen Endabschnitt, einen Schaftabschnitt und einen gebogenen Basisabschnitt aufweist, und das erste (44, 82) und das zweite (46, 84) Rippenelement extrudiert werden, die im Querschnitt eine allgemeine Dreieckform oder Kreisform aufweisen, und wobei das erste (44, 82) und das zweite (46, 84) Rippenelement auf der Filmbahn (16) in einem Abstand voneinander von 3,4 bis 4,6 mm ausgerichtet sind.

6. Extrusionseinrichtung (52, 72) zum Extrudieren eines Verschlußprofilelementes (42, 80), eines ersten Rippenelementes (44, 82) und eines zweiten Rippenelementes (46, 84) auf einer Filmbahn (16) aus einem synthetischen Harzmaterial, umfassend eine Extrusionsform (52, 72), die einen Verschlußprofil-Düsenschlitz (56, 74), durch den das Verschlußprofilelement (74, 80) extrudiert wird, einen ersten Rippenelement-Düsenschlitz (58, 76), durch den das erste Rippenelement (44, 82) extrudiert wird, und einen zweiten Rippenelement-Düsenschlitz (60, 78) aufweist, durch den das zweite Rippenelement (46, 84) extrudiert wird, wobei der Verschlußprofil-Düsenschlitz (56, 74) und die ersten und zweiten Rippenelement-Düsenschlitze (58, 76; 60, 78) positioniert sind, um das Verschlußprofilelement (42, 74) und die ersten und zweiten Rippenelemente (44, 76; 46, 78) als drei separate Extrudate zu extrudieren, und das Verschlußprofilelement (42, 80) und das erste (44, 76) und das zweite (46, 78) Rippenelement zu der Filmbahn (16) in einer ausgerichteten Beziehung übergeben werden derart, daß das Verschlußprofilelement (42, 80) zwischen dem ersten (44, 82) und dem zweiten (46, 84) Rippenelement angeordnet ist.

7. Extrusionseinrichtung (52, 72) nach Anspruch 6, bei der der Verschlußprofil-Düsenschlitz (56, 74) und der erste (78, 76) und der zweite (60, 78) Rippenelement-Düsenschlitz vertikal voneinander versetzt sind.

8. Extrusionseinrichtung (52, 72) nach Anspruch 7, bei der der Verschlußprofil-Düsenschlitz (56, 74) eine im wesentlichen vertikale Achse (A) aufweist, die den Düsenschlitz (56, 74) halbiert, wobei der erste Rippenelement-Düsenschlitz (58, 76) auf einer Seite der Achse (A) und der zweite Rippenelement-Düsenschlitz (60, 78) auf einer anderen Seite der Achse (A) angeordnet sind.

9. Extrusionseinrichtung (52, 72) nach Anspruch 7, bei der der Verschlußprofil-Düsenschlitz (56, 74) einen oberen Endabschnitt (62) umfaßt und wenigstens eines von dem ersten (58, 76) und dem zweiten (60, 78) Rippenelement-Düsenschlitz von dem oberen Endabschnitt (62) um einen Abstand vertikal versetzt ist, der größer als der Abstand (H) ist, um den der wenigstens eine Rippenelement-Düsenschlitz (58, 76) von dem oberen Endabschnitt (62) seitlich versetzt ist.

10. Extrusionseinrichtung (52, 72) nach Anspruch 7, 8 oder 9, bei der der erste (58, 76) und der zweite (60, 78) Rippenelement-Düsenschlitz seitlich voneinander um einen Abstand von 3,4 bis 4,6 mm seitlich versetzt sind.

11. Extrusionseinrichtung (52, 72) nach einem beliebigen der Ansprüche 6-10, bei der der erste (58, 76) und der zweite (60, 78) Rippenelement-Düsenschlitz einen im wesentlichen dreieckförmigen oder kreisförmigen Querschnitt aufweisen.

12. Vorrichtung (10) zur Anbringung eines Verschlußprofils (42, 80) mit benachbarten Rippen (44, 46; 82, 84) an einer sich bewegenden Filmbahn (16) aus einem synthetischen Harzmaterial, umfassend
- eine erste Extrusionseinrichtung (32) zum Extrudieren eines Basiselementes (26),
- eine Einrichtung (36) zum Drücken des Basiselementes (26) gegen die Filmbahn (16) und
- eine zweite Extrusionseinrichtung (52, 72) zum Extrudieren eines Verschlußprofilelementes (42, 80), eines ersten Rippenelementes (44, 82) und eines zweiten Rippenelementes (46, 84) als drei getrennte Extrudate, wobei die zweite Extrusionseinrichtung (52, 72) aufgebaut ist, um das Verschlußprofilelement (42, 80), das erste Rippenelement (44, 82) und das zweite Rippenelement (46, 84) mit der Filmbahn (16) in einer ausgerichteten Beziehung zu verbinden derart, daß das Verschlußprofilelement (42, 80) zwischen dem ersten (44, 80) und dem zweiten (46, 84) Rippenelement angeordnet ist.

13. Vorrichtung (10) nach Anspruch 12, bei der die zweite Extrusionseinrichtung (52, 72) eine Extrusionsdüse (52, 72) umfaßt, die einen Verschlußprofil-Düsenschlitz (56, 74), durch den das Verschlußprofilelement (42, 80) extrudiert wird, einen ersten Rippenelement-Düsenschlitz (58, 72), durch den das erste Rippenelement (44, 76) extrudiert wird, und einen zweiten Rippenelement-Düsenschlitz (60, 78) aufweist, durch den das zweite Rippenelement (46, 84) extrudiert wird, und bei der der Verschlußprofil-Düsenschlitz (56, 74) in vertikaler Richtung von wenigstens einem von dem ersten (58, 76) und dem zweiten (60, 78) Rippenelement-Düsenschlitz vertikal versetzt ist.

14. Vorrichtung (10) nach Anspruch 13, bei der der Verschlußprofil-Düsenschlitz (56, 74) von jedem von dem ersten Rippenelement-Düsenschlitz (58, 76) und dem zweiten Rippenelement-Düsenschlitz (56, 78) vertikal versetzt ist.

## Revendications

1. Procédé pour fixer un profil (42, 80) avec des nervures adjacentes (44, 46; 82, 84) sur une bande de film en mouvement (16) pour former une fermeture du type à glissière, procédé comportant les étapes consistant à:
extruder un élément formant profil de fermeture (42, 80), un premier élément formant nervure (44, 80) et un second élément formant nervure (46, 82) sous forme de trois extrudats distincts, et
fixer ledit premier élément formant profil de fermeture (42, 80), ledit premier élément formant nervure (44, 80) et ledit second élément formant nervure (46, 82) sur ladite bande de film (16) en alignement de façon telle que ledit élément formant profil de fermeture (42, 80) soit disposé entre ledit premier (44, 80) et ledit second (46, 82) éléments formant nervure.

2. Procédé selon la revendication 1, incluant les étapes consistant à extruder un élément (26) formant base de forme générale plane et à fixer ledit élément de base (26) à ladite bande de film (16) avant de fixer ledit élément formant profil de fermeture (42, 80) et lesdits éléments formant nervure (44, 46; 82, 40) audit élément de base (26).

3. Procédé selon la revendication 2, incluant les étapes consistant à presser ledit élément de base (26), pour qu'il se fixe sur ladite bande de film (16), avec un rouleau (36) et à fixer ledit élément formant profil de fermeture (42, 80), ledit premier élément formant nervure (44, 80) et ledit second élément formant nervure (46, 82) audit élément de base (26) après que ledit élément de base (26) a été fixé à ladite bande de film (16) et avant que ledit élément de base (26) ait refroidi à la température ambiante.

4. Procédé de la revendication 1, 2 ou 3, dans lequel ledit élément formant profil de fermeture (42, 80), ledit premier élément formant nervure (44, 82) et ledit second élément formant nervure (46, 84) sont extrudés à travers une filière d'extrusion (52, 72) présentant une fente (56, 74) formant filière pour le profil de fermeture, fente à travers laquelle ledit élément formant profil de fermeture (42, 80) est extrudé, une fente (58, 76) formant filière pour un premier élément formant nervure, fente à travers laquelle ledit premier élément formant nervure (44, 82) est extrudé, et une fente (60, 78) formant filière pour le second élément formant nervure, fente à travers laquelle ledit second élément formant nervure (46, 84) est extrudé.

5. Procédé selon l'une quelconque des revendications précédentes, incluant l'étape consistant à extruder ledit élément formant profil de fermeture (42, 80) présentant, en section transversale, une portion de tête en forme de flèche, une portion formant tige et une portion de base en arc, et à extruder ledit premier (44, 82), et ledit second (46, 84) éléments formant nervure présentant, en section transversale, une forme générale triangulaire ou circulaire, et procédé dans lequel ledit premier (44, 82) et ledit second (46, 84) éléments formant nervure sont alignés sur ladite bande de film (16) à une distance l'un de l'autre allant de 3,4 à 4,6 mm.

6. Moyen d'extrusion (52, 72) pour extruder un élément formant profil de fermeture (42, 80), un premier élément formant nervure (44, 82) et un second élément formant nervure (46, 84) sur une bande de film (16) en matériau résineux synthétique, moyen comportant une filière d'extrusion (52, 72) présentant une fente (56, 74) formant filière d'un élément formant profil de fermeture, fente à travers laquelle ledit élément formant profil de fermeture (74, 80) est extrudé, une fente (58, 76) formant filière pour un premier élément formant nervure, fente à travers laquelle ledit premier élément formant nervure (44, 82) est extrudé, et une seconde fente (60, 78) formant filière pour un second élément formant nervure, fente à travers laquelle ledit second élément formant nervure (46, 84) est extrudé, la fente (56, 74) formant filière pour ledit élément formant profil de fermeture et les fentes (58, 76; 60, 78) formant filières pour lesdits premier et second éléments formant nervure étant disposées de façon à extruder ledit élément (42, 74) formant profil de fermeture et lesdits premier et second éléments formant nervure (44, 76; 46, 78) sous forme de trois extrudats distincts et pour amener ledit élément (42, 80) formant profil de fermeture et ledit premier (44, 76) et ledit second (46, 78) éléments formant nervure sur ladite bande de film (16) en alignement de façon que ledit élément (42, 80) formant profil de fermeture soit disposé entre ledit premier (44, 82) et ledit second (46, 84) éléments formant nervure.

7. Moyen d'extrusion (52, 72) selon la revendication 6, dans lequel la fente (56, 74) formant filière pour ledit élément formant profil de fermeture et les fentes formant filière pour ledit premier (58, 76) et ledit second (60, 78) éléments formant nervure sont décalées verticalement l'une par rapport à l'autre.

8. Moyen d'extrusion (52, 72) selon la revendication 7, dans lequel la fente (56, 74) formant filière pour ledit élément formant profil de fermeture présente un axe (A) substantiellement vertical bissecteur de ladite fente (56, 74) formant filière, la fente (58, 76) formant filière pour ledit premier élément formant nervure étant disposée d'un côté dudit axe (A) et la fente (60, 68) formant filière pour ledit second élément formant nervure étant disposée de l'autre côté dudit axe (A).

9. Moyen d'extrusion (52, 72) de la revendication 7, dans lequel la fente (56, 74) formant filière pour ledit élément formant profil de fermeture présente une portion de tête (62) et dans lequel au moins l'une des fentes formant filière pour lesdits premier (58, 76) et second (60, 78) éléments formant nervure est décalée verticalement par rapport à ladite portion de tête (62) d'une distance supérieure à la distance (H) dont ladite fente (58, 76), formant filière pour ledit élément formant nervure est latéralement décalée par rapport à ladite portion de tête (62).

10. Moyen d'extrusion (52, 72) selon les revendications 7, 8 ou 9, dans lequel les fentes formant filière pour lesdits premier (58,76) et second (60, 78) éléments formant nervure sont décalées latéralement l'une de l'autre d'une distance allant de 3,4 à 4,6 mm.

11. Moyen d'extrusion (52, 72) selon l'une quelconque des revendications 6 à 10, dans lequel les fentes formant filière pour ledit premier (58, 76) et ledit second (60, 78) éléments formant nervure ont chacune une section transversale de forme générale triangulaire ou circulaire.

12. Appareil (10) pour appliquer un profil de fermeture (42, 80) avec des nervures adjacentes (44, 46; 82, 84) sur une bande de film en mouvement (16) d'un matériau résine synthétique, appareil comportant:
un premier moyen d'extrusion (32) pour extruder un élément de base (26),
un moyen (36) pour presser ledit élément de base (26) contre ladite bande de film (16) et
un second moyen d'extrusion (52, 72^{b}) pour extruder un élément formant profil de fermeture (42, 80), un premier élément formant nervure (44, 82) et un second élément formant nervure (46, 84) sous forme de trois extrudats distincts, ledit second moyen d'extrusion (52, 72) étant construit pour fixer ledit premier élément formant profil de fermeture (42, 80), ledit premier élément formant nervure (44, 82) et ledit second élément formant nervure (46, 84) à ladite bande de film (16), en alignement, de façon que ledit élément formant profil de fermeture (42, 80) soit disposé entre ledit premier (44, 80) et ledit second (46, 84) éléments formant nervure.

13. Appareil (10) selon la revendication 12, dans lequel ledit second moyen d'extrusion (52, 72) comporte une filière d'extrusion (52, 72) présentant une fente (56, 74) formant filière pour le profil de fermeture, fente à travers laquelle ledit élément formant profil de fermeture (42, 80) est extrudé, une fente (58, 72) formant filière pour le premier élément formant nervure, fente à travers laquelle ledit premier élément formant nervure (44, 76) est extrudé, et une fente (60, 70) formant filière pour le second élément formant nervure, fente à travers laquelle ledit second élément formant nervure (46, 84) est extrudé, et appareil dans lequel ladite fente (56, 74) formant filière pour le profil de fermeture est décalée verticalement par rapport à au moins l'une desdites fentes formant filière pour le premier (58, 76) et le second (60, 78) éléments formant nervure.

14. Appareil (10) selon la revendication 13, dans lequel ladite fente (56, 74) formant filière du profil de fermeture est décalée verticalement par rapport à chacune, de ladite fente (58, 76) formant filière pour le premier élément formant nervure et de ladite fente (56, 78) formant filière pour le second élément formant nervure.
